# EUROPÄISCHE PATENTSCHRIFT

(11) **EP 2 253 522 B1**
(45) Veröffentlichungstag und Bekanntmachung des Hinweises auf die Patenterteilung: **11.07.2012**
(21) Anmeldenummer: 10005156.4
(22) Anmeldetag: 18.05.2010
(51) Int. Cl.: B60W 30/12, B62D 1/28, B62D 15/02

(54) **Verfahren zum Betrieb eines Fahrerassistenzsystems zur Querführung eines Kraftfahrzeugs und Kraftfahrzeug**
Method for operating a driver assistance system for transverse guidance of a motor vehicle and motor vehicle
Procédé de fonctionnement d'un système d'assistance au conducteur pour le guidage latéral d'un véhicule automobile et véhicule automobile

(30) Priorität: 20.05.2009 DE 102009022054
(43) Veröffentlichungstag der Anmeldung: 24.11.2010
(73) Patentinhaber: Audi AG, 85045 Ingolstadt (DE)
(72) Erfinder: Limbacher, Reimund, 85055 Ingolstadt (DE)
(74) Vertreter: Thielmann, Frank

(56) Entgegenhaltungen:
- EP-A2- 0 806 336
- EP-A2- 1 500 574
- DE-A1- 19 830 548
- DE-A1-102005 004 726
- DE-A1-102005 052 034
- DE-A1-102007 027 495
- DE-A1-102007 050 189
- US-A1- 2005 228 588

## Beschreibung

Die Erfindung betrifft ein Verfahren zum Betrieb eines Fahrerassistenzsystems zur Querführung eines Kraftfahrzeugs, insbesondere eines Spurhalteassistenzsystems, welches Fahrerassistenzsystem zum Durchführen eines Querführungseingriffs und/oder zum Warnen des Fahrers bei einem erkannten Verlassen der Spur durch das Kraftfahrzeug ausgebildet ist, sowie ein zugehöriges Kraftfahrzeug, wobei die Lage und/oder Breite eines eingriffsfreien und/oder warnungsfreien Bereichs und/oder bei einem mittenführenden Fahrerassistenzsystem die zu haltende Mittenposition in Abhängigkeit wenigstens einer die Umgebung des Kraftfahrzeugs beschreibenden Größe angepasst wird, und wobei bei einer Verschiebung des Eingriffszeitpunktes und/oder des Warnungszeitpunktes nach außen eine zusätzliche Warnung bei erkanntem Verlassen der Fahrspur ausgegeben wird und/oder bei einem durch eine gegebenenfalls schwellwertbasierte Aktion, insbesondere ein Handlenkmoment, des Fahrers deaktivierbaren und/oder übersteuerbaren Querführungseingriff der Schwellwert erhöht und/oder die Aktion geringer auf die Übersteuerung angerechnet wird.

Fahrerassistenzsysteme zur Querführung des Kraftfahrzeugs sind im Stand der Technik heute weithin bekannt. Insbesondere Spurhalteassistenzsysteme, beispielsweise die sogenannten "Lane-Departure-Warning"-Systeme und die "Lane-Keeping-Assistence"-Systeme (LKA-Systeme), werden immer häufiger genutzt. Während LDW-Systeme eine Warnung ausgeben, wenn ein Verlassen der Fahrspur erkannt wird, stellen LKA-Systeme einen tatsächlichen Querführungseingriff, nämlich ein Gegenlenkmoment, zur Verfügung, versuchen also aktiv, ein Halten der Spur zu ermöglichen. Fahrerassistenzsysteme zur Querführung des Kraftfahrzeugs treten zu einem bestimmten Warn- bzw. Eingriffszeitpunkt in Aktion, der auf verschiedene Art und Weise ermittelt werden kann. Beispielsweise ist es bekannt, die Zeit bis zum Verlassen der Fahrspur zu ermitteln und bei Unterschreiten einer gewissen Grenze die Aktion auszulösen. Analog kann auch der Abstand zu einer Spurbegrenzung oder auch die Fahrtstrecke bis zu einer Spurbegrenzung von ausgezeichneten Punkten des Kraftfahrzeugs betrachtet werden.

Fahrerassistenzsysteme zur Querführung des Kraftfahrzeugs umfassen neben einem Steuergerät dabei Sensoren, insbesondere eine Kamera, deren Signale - gegebenenfalls mit anderen den Betriebszustand des Kraftfahrzeugs beschreibenden Parametern - ausgewertet werden, wobei für den Warn- bzw. Eingriffszeitpunkt beispielsweise Eingangsgrößen wie Spurbreite, die Spurkrümmung und die laterale Fahrzeuggeschwindigkeit sowie der Gierwinkel zur Spurmarkierung berücksichtigt werden können.

Bei Fahrerassistenzsystemen zur Querführung des Kraftfahrzeugs, die zum Erzeugen eines Gegenlenkmomentes bei einem erkannten Verlassen der Spur durch das Kraftfahrzeug ausgebildet sind, ist es bekannt, diese so auszulegen, dass ein Lenkeingriff des Fahrerassistenzsystems leicht durch eine Aktion des Fahrers reduziert oder ganz abgebrochen werden kann, beispielsweise, wenn der Fahrer einen Spurwechsel ohne Betätigung des Fahrtrichtungsanzeigers durchführt. Beispielsweise kann vorgesehen sein, dass der Fahrer als Aktion einen gegengerichteten Lenkeingriff durchführt, mithin ein Handlenkmoment erzeugt, welches dann entweder, beispielsweise falls es einen Schwellwert überschreitet, zum Abbruch des Lenkeingriffs des Fahrerassistenzsystems führt oder zur Übersteuerung des Gegenlenkmoments dient. Der Fahrer ist also jederzeit in der Lage, einen korrigierenden Querführungseingriff des Fahrerassistenzsystems durch eigene Aktionen zu beenden oder diesem entgegenzuwirken.

Weiterhin sind auch sogenannte mittenführende Fahrerassistenzsysteme, insbesondere mittenführende Spurhalteassistenzsysteme, bekannt. Bei dieser Art von Systemen ist es das Ziel, das Fahrzeug schon bei geringen Abweichungen von der Spurmitte bzw. einer Ideallinie wieder auf diese zurückzubringen. Sobald also ein Kraftfahrzeug von einer zu haltenden Mittenposition auf der aktuellen Fahrspur abweicht, wird bereits ein korrigierender Querführungseingriff durch das Fahrerassistenzsystem durchgeführt.

Schließlich sind noch Fahrerassistenzsysteme zur Querführung des Kraftfahrzeugs bekannt, bei denen eine Warnung ausgegeben wird, wenn ein Warnzeitpunkt, der auf ein bevorstehendes Verlassen der Spur oder Überfahren einer Spurmarkierung hinweist, erreicht ist. Beispielsweise können akustische oder optische Warnsignale ausgegeben werden, häufig ist jedoch vorgesehen, dass das Lenkrad in Vibration versetzt wird, um den Fahrer so auf das bevorstehende Verlassen der aktuellen Fahrspur hinzuweisen.

Abgesehen von den mittenführenden Fahrerassistenzsystemen werden Fahrerassistenzsysteme mit korrigierendem Querführungseingriff oder auch warnende Fahrerassistenzsysteme heute meist so ausgelegt, dass die Warnungen bzw. intervenierenden Eingriffe relativ spät gegeben werden, um den Fahrer durch zu frühe bzw. häufige Eingriffe nicht zu bevormunden. Es ist also ein eingriffsfreier und/oder warnungsfreier Bereich der Spur vorhanden, dessen Ränder durch die Kriterien zur Bestimmung des Eingriffszeitpunkts bzw. des Warnzeitpunkts bestimmt sind und eher außen liegen.

Nichtsdestotrotz zeigt sich, dass Fahrer eines Kraftfahrzeugs im Allgemeinen nicht unter allen Umständen mittig auf der aktuellen Fahrspur verbleiben. So ist es beispielsweise bei einer Mehrzahl von Fahrern bekannt, dass bei einer Fahrzeugkolonne, insbesondere LKWs, auf einer rechts benachbarten Spur eher etwas mehr links gefahren wird, um mehr Abstand zwischen die entsprechenden Fahrzeuge und sich selbst zu bringen. Ähnliches gilt für Respektabstände von Leitplanken oder dergleichen. Solcherlei spezielles Fahrverhalten wird bei heutigen Fahrerassistenzsystemen zur Querführung des Kraftfahrzeugs nicht berücksichtigt und nicht unterstützt.

Die DE 10 2007 027 495 A1 betrifft ein Verfahren zur Unterstützung des Fahrers eines Kraftfahrzeuges bei der Querführung des Kraftfahrzeugs. Dabei soll eine Vorrichtung zur Durchführung eines selbsttätigen Lenkeingriffs geschaffen werden, die noch besser an die individuellen Bedürfnisse eines Fahrers anpassbar ist. Hierzu soll eine linke und eine rechte Fahrspurbegrenzung einer vom Kraftfahrzeug befahrenen Fahrspur und weiterhin die Position des Kraftfahrzeugs relativ zu der Fahrspur sowie seitliche Objekte, an denen das Kraftfahrzeug seitlich vorbeifahren wird, erfasst werden. Ein momentaner oder für die nahe Zukunft prädizierter Seitenabstand zwischen dem Kraftfahrzeug und den Fahrspurbegrenzungen und zwischen dem Kraftfahrzeug und den erfassten seitlichen Objekten wird ermittelt und bei Unterschreitung von vorgebbaren Seitenabstandsgrenzen wird eine Fahrerwarnung ausgelöst und/oder ein selbsttätiger Lenkeingriff zur Vergrößerung des Seitenabstands ausgelöst. Diese Grenzen sind vom Fahrer unabhängig variierbar, mithin einstellbar.

Der Erfindung liegt daher die Aufgabe zugrunde, die Akzeptanz von Fahrerassistenzsystemen zur Querführung des Kraftfahrzeugs zu erhöhen, indem flexibler auf Umgebungsbedingungen reagiert werden kann.

Zur Lösung dieser Aufgabe sind bei einem Verfahren zum Betrieb eines Fahrerassistenzsystems zur Querführung der eingangs genannten Art erfindungsgemäß die Merkmale des Anspruchs 1 vorgesehen.

Erfindungsgemäß wird also die Umgebung des Kraftfahrzeugs ausgewertet, wobei mit besonderem Vorteil als die Umgebung des Kraftfahrzeugs beschreibende Größe wenigstens eine wenigstens ein Objekt in der Umgebung des Kraftfahrzeugs beschreibende Größe und/oder wenigstens eine die Kurvigkeit der Fahrspur beschreibende Größe verwendet werden kann. Basierend auf diesen zusätzlichen Umgebungsgrößen kann letztlich der Freiraum oder die Ideallinie des Kraftfahrzeugs angepasst werden, um den Fahrer in besonderen Situationen mehr Eingriffsfreiraum zu bieten oder auch zu antizipieren, ob dieser eine andere zu haltende Mittelposition gewählt hätte, so dass schließlich eine bessere Akzeptanz des Fahrerassistenzsystems zur Querführung erreicht wird. Dieses wird im Sinne der vorliegenden Erfindung mithin flexibel gestaltet, passt sich also in seinen Warn- bzw. Eingriffseigenschaften der Umgebung an.

Dabei können insbesondere Objekte in der Umgebung des Kraftfahrzeugs, beispielsweise also andere Fahrzeuge, Leitplanken usw., die der aktuell befahrenen Spur benachbart sind oder sich sogar auf dieser Spur befinden, berücksichtigt werden, um das Fahrerassistenzsystem auf deren Gegenwart einzustimmen. Ebenso kann die Kurvigkeit der Fahrspur, die häufig auch zu einer Veränderung der Ideallinie führt, ermittelt und berücksichtigt werden. Diese Umgebungsgrößen - die Objektgrößen und die Kurvigkeitsgrößen - können von anderen Fahrzeugsystemen, insbesondere auch anderen Fahrerassistenzsystemen, beispielsweise Fahrerassistenzsystemen zur Längsführung des Kraftfahrzeugs, Navigationssystemen oder dergleichen, zur Verfügung gestellt werden. Dabei sind beispielsweise verschiedene Sensoren vorgesehen, deren Signale ausgewertet werden, um die entsprechenden Größen zu erhalten. Dies kann durch ein Steuergerät des Fahrerassistenzsystems zur Querführung selbst geschehen, oder aber auch durch andere Steuergeräte und/oder Recheneinrichtungen im Kraftfahrzeug.

Grundsätzlich können verschiedene Sensoren zur Ermittlung der Umgebungsgröße verwendet werden. Beispielsweise können wenigstens ein Ultraschallsensor und/oder wenigstens ein Radarsensor und/oder wenigstens ein Lidarsensor und/oder eine Kamera zur Ermittlung der Umgebungsgröße vorgesehen sein. Ultraschallsensorik eignet sich beispielsweise besonders gut, erhabene Objekte direkt neben einer erkannten Fahrspurmarkierung zu erkennen, die sich nicht auf der aktuellen Fahrspur befinden. Eine Kamera, deren Bildsignal häufig ohnehin auf den Spurverlauf hin ausgewertet wird, kann auch zur Erkennung der Kurvigkeit der aktuellen Fahrspur verwendet werden, aus einem Kamerasignal lassen sich jedoch auch weitere Umgebungsinformationen als Umgebungsgröße schlussfolgern. Beliebige Möglichkeiten sind denkbar, um die die Umgebung des Kraftfahrzeugs beschreibende Größe zu ermitteln.

In besonders vorteilhafter Ausgestaltung der vorliegenden Erfindung kann bei der Anpassung auch wenigstens eine das aktuelle Fahrverhalten und/oder den Fahrstil des Fahrers kennzeichnende Größe berücksichtigt werden. Die Anpassung erfolgt dabei also nicht nur abhängig von der aktuellen Situation bezogen auf die Umgebung, sondern auch abgestimmt auf das aktuelle Fahrverhalten des Fahrers und/oder den Fahrstil eines Fahrers. So ist es zum einen möglich, das Fahrverhalten von Fahrern situationsbezogen über die Zeit zu analysieren, um beispielsweise bei ausgeschaltetem mittenführendem Fahrerassistenzsystem festzustellen, wie der Fahrer seine Ideallinie, also eine durch das Fahrerassistenzsystem zu haltende Mittenposition, wählt, um diese dann situationsabhängig auch für das mittenführende Fahrerassistenzsystem in Abhängigkeit der Umgebungsgrößen zu nutzen. Auf diese Weise kann ein sich hervorragend an den Fahrstil eines Fahrers adaptierendes mittenführendes Fahrerassistenzsystem geschaffen werden. Doch solche Informationen über den situationsbezogenen Fahrstil können auch bezüglich nicht mittenhaltender Fahrerassistenzsysteme vorteilhaft genutzt werden, um beispielsweise die Warnzeitpunkte bzw. Eingriffszeitpunkte auf den beiden Seiten der Fahrspur entsprechend anpassen zu können und dem Fahrer den Freiraum zu gewähren, den sein Fahrstil erfordert. Daneben kann selbstverständlich auch das aktuelle Fahrverhalten des Fahrers, insbesondere bei einem aktivierten mittenführenden Fahrerassistenzsystem betrachtet werden. Steuert der Fahrer beispielsweise über einen bestimmten Zeitraum gegen das vom Fahrerassistenzsystem erzeugte Gegenlenkmoment, das ihn zu der zu haltenden Mittenposition zurückzubringen sucht, kann wenigstens kurzfristig diese zu haltende Mittenposition verschoben werden.

Somit wird durch Mitbeachtung des Fahrerverhaltens die Systemfunktionalität weiter verbessert und die Akzeptanz von Fahrerassistenzsystem zur Querführung erhöht.

Wird die Lage und/oder Breite eines eingriffsfreien und/oder warnungsfreien Bereichs angepasst, so kann konkret vorgesehen sein, dass eine Schwelle zum Durchführen des Querführungseingriffs oder zum Warnen des Fahrers, insbesondere unabhängig auf beiden Seiten der Fahrspur, angepasst wird. Beispielsweise kann vorgesehen sein, dass zur Bestimmung eines Eingriffszeitpunkts bzw. Warnzeitpunkts eine bestimmte durch das Fahrerassistenzsystem ermittelte Beobachtungsgröße betrachtet wird, beispielsweise eine Zeit bis zum Überqueren/Erreichen einer Spurmarkierung oder ein Abstand zu einer Spurmarkierung. Der Warnzeitpunkt bzw. Eingriffszeitpunkt wird dann erreicht, wenn eine bestimmte Schwelle (also ein Grenzwert) überschritten wird. Diese Schwelle kann nun in Abhängigkeit der Umgebungsgrößen erfindungsgemäß angepasst werden, um den eingriffsfreien und/oder warnungsfreien Bereich der Situation anzupassen. Insbesondere kann dabei auch vorgesehen sein, dass eine Schwelle so angepasst wird, dass ein Querführungseingriff und/oder eine Warnung später erfolgt. In diesem Fall tritt also eine Verschiebung des Eingriffszeitpunkts und/oder Warnzeitpunkts in Richtung der jeweiligen Spurbegrenzung ein, beispielsweise, wenn für den Fahrer ein Grund besteht, nicht exakt die Mitte der Spur zu halten. Dann kann in der entsprechenden Abweichungsrichtung mehr Raum zur Verfügung gestellt werden, gleichzeitig kann natürlich vorgesehen werden, dass auf der anderen Seite ein Querführungseingriff und/oder eine Warnung früher erfolgt.

In konkreter Ausgestaltung der vorliegenden Erfindung kann vorgesehen sein, dass bei einem wenigstens ein außerhalb der aktuellen Fahrspur liegendes, einer Fahrspurmarkierung der aktuellen Fahrspur benachbartes, relevantes Objekt anzeigenden Signal ein Querführungseingriff und/oder eine Warnung auf der dem Objekt abgewandten Fahrspurseite später erfolgt oder die zu haltende Mittenposition von dem Objekt weg verschoben wird. Als Umgebungsgröße wird hier also ein wenigstens ein außerhalb der aktuellen Fahrspur liegendes, einer Fahrspurmarkierung der aktuellen Fahrspur benachbartes, relevantes Objekt betrachtet. Ein solches Objekt muss sich in einem relevanten longitudinalen Entfernungsbereich oder auch neben dem eigenen Kraftfahrzeug befinden. Dabei kann es sich beispielsweise um ein oder mehrere Fahrzeuge auf einer benachbarten Fahrspur handeln oder auch eine Leitplanke bzw. Vegetation, die sich recht unmittelbar an die aktuell befahrene Fahrspur anschließt. Dann ist es bekannt, dass Fahrer eher dazu tendieren, etwas "Respektsabstand" zu solchen Objekten zu halten. Erfindungsgemäß wird daher vorgeschlagen, die zu haltende Mittenposition - gegebenenfalls auch unter Berücksichtigung des Fahrstils bzw. aktuellen Fahrverhaltens des Fahrers - von dem Objekt weg zu verschieben oder dem Fahrer wenigstens mehr Freiraum auf der dem Objekt abgewandten Seite zur Verfügung zu stellen, so dass es nicht zu Fehlwarnungen/Fehleingriffen kommen kann. In der Variante, in der der Warnzeitpunkt bzw. Eingriffszeitpunkt in Richtung der dem Objekt abgewandten Spurmarkierung verschoben wird, kann zusätzlich vorgesehen sein, dass ein Querführungseingriff und/oder eine Warnung auf der dem Objekt zugewandten Fahrspurseite früher erfolgt, mithin der Eingriffszeitpunkt/Warnzeitpunkt auf der dem Objekt zugewandten Seite in dieselbe Richtung wie auf der abgewandten Seite verschoben wird, mithin sich die Lage des eingriffsfreien und/oder warnungsfreien Bereichs insgesamt verschiebt. Dies ist insbesondere bei kritischen Objekten vorteilhaft. Es sei angemerkt, dass bei beidseitig der Fahrspur detektierten relevanten Objekten selbstverständlich auch eine Aufrechnung erfolgen kann.

In einer weiteren konkreten Ausgestaltung der vorliegenden Erfindung kann vorgesehen sein, dass bei einem wenigstens ein dem Kraftfahrzeug voranfahrendes Fahrzeug anzeigenden Signal ein Querführungseingriff und/oder eine Warnung linksseitig später erfolgen. Häufig kann nämlich beobachtet werden - und hierbei können wiederum das aktuelle Fahrverhalten und/oder den Fahrstil beschreibende Größen berücksichtigt werden -, dass Fahrer hinter einer Kolonne, beispielsweise im Falle eines Staus, nach links ausscheren, um an der Kolonne vorbeisehen zu können und die Situation besser einsehen zu können. Dieser Freiraum kann dem Fahrer beim erfindungsgemäßen Verfahren automatisch gegeben werden, so dass dieser nicht mit störenden Eingriffen rechnen muss. Auch hierbei sei allerdings hervorgehoben, dass andere Umgebungsgrößen berücksichtigt werden können, beispielsweise ein linksseitig der Spurmarkierung benachbartes Objekt, so dass in einem solchen Fall beispielsweise keine oder nur eine geringe Verschiebung des Eingriffszeitpunkts bzw. Warnzeitpunkts erfolgen kann.

Auch bei einem mittenführenden Fahrerassistenzsystem kann eine derartige Verhaltensweise realisiert werden, wenn bei einem wenigstens ein dem Kraftfahrzeug voranfahrendes Fahrzeug anzeigenden Signal und einem für eine vorbestimmte Zeit andauernden Gegenlenken des Fahrers nach links die zu haltende Mittenposition nach links verschoben wird. Deutet der Fahrer nämlich durch ständiges Gegenlenken an, dass er zur besseren Übersicht über die Situation etwas mehr links fahren möchte, kann dieser Wunsch detektiert und durch das Fahrerassistenzsystem folglich erfüllt werden. Dabei kann zweckmäßigerweise vorgesehen sein, dass bei einem nachfolgenden rechtzeitigen Gegenlenken des Fahrers die linksseitige Verschiebung der zu haltenden Mittenposition aufgehoben wird, das bedeutet, der Fahrer kann ebenso signalisieren, wieder in die alte zu haltende Mittenposition zurückkehren zu wollen.

In weiterer konkreter Ausgestaltung des erfindungsgemäßen Verfahrens kann vorgesehen sein, dass bei einer Kurve eine Anpassung ein Schneiden der Kurve unterstützend erfolgt. Wird folglich eine Kurve detektiert, so ist bekannt, dass Fahrer in den meisten Fällen dazu tendieren, die Kurve zu schneiden, allein um im Falle eines Abtragens mehr Raum zur Verfügung zu haben. Dementsprechend kann dieses Verhalten auch durch ein Fahrerassistenzsystem zur Querführung abgebildet werden, beispielsweise indem die zu haltende Mittenposition die Kurve in einem bestimmten Grade schneidend angesetzt wird, mithin zum Kurveninneren hin verschoben wird. Genauso ist es möglich, bei einer Kurve nach innen hin dem Fahrer einen größeren Freiraum zu gewähren und gegebenenfalls nach außen hin diesen Freiraum einzuschränken.

Wie dargelegt, wird bei einer Verschiebung des Eingriffszeitpunktes und/oder des Warnungszeitpunktes nach außen später gewarnt bzw. eingegriffen. Um dennoch weiterhin eine hohe Fahrsicherheit zu gewährleisten, wird diese Maßnahme im erfindungsgemäßen Verfahren mit besonderem Vorteil dadurch ergänzt, dass eine zusätzliche Warnung bei erkanntem Verlassen der Fahrspur ausgegeben wird und/oder bei einem durch eine gegebenenfalls schwellwertbasierte Aktion, insbesondere ein Handlenkmoment, des Fahrers deaktivierbaren und/oder übersteuerbaren Querführungseingriff der Schwellwert erhöht und/oder die Aktion geringer auf die Übersteuerung angerechnet wird. Die Idee ist hier, zum Eingriffszeitpunkt (wie bereits dargelegt beispielsweise bei Unterschreiten einer Schwelle durch die Zeit bis zum Überfahren einer Fahrspurmarkierung oder auch eines Abstands zu einer Fahrspurmarkierung) die vom Fahrerassistenzsystem durchgeführten Maßnahmen so zu verändern und/oder zu erweitern, dass zum einen der Fahrer verstärkt auf die Verlassenssituation hingewiesen wird und/oder eine Deaktivierung oder Übersteuerung wenigstens erschwert wird. Dafür kann zum einen die Deaktivierung und/oder Übersteuerung erschwert werden, das bedeutet, es kann der Schwellwert zur Deaktivierung durch die fahrerseitige Aktion erhöht und/oder die Aktion geringer zur Übersteuerung angerechnet werden. So wird im Sinne einer erhöhten Fahrsicherheit eine Übersteuerung oder Deaktivierung durch den Fahrer, insbesondere durch sein Gegenlenken gegen ein Gegenlenkmoment, aufwändiger gestaltet, so dass mit größerer Wahrscheinlichkeit davon ausgegangen werden kann, dass sich der Fahrer der Konsequenzen seiner Aktion bewusst wird - auch diese Erschwerung der Deaktivierung bzw. Übersteuerung erfüllt also eine Hinweisfunktion. Alternativ oder zusätzlich kann parallel zum Querführungseingriff, also dem Gegenlenkmoment, eine spezielle Warnung ausgegeben werden, die den Fahrer deutlich auf sein Verlassen der Spur hinweist.

Es sei an dieser Stelle nochmals auf drei mögliche Varianten der Berücksichtigung der fahrerseitigen Aktion eingegangen. So kann vorgesehen sein, dass das Fahrerassistenzsystem zum Vergleich des Schwellwerts mit einem absoluten Wert für das Handlenkmoment oder einem Differenzbetrag zwischen dem Gegenlenkmoment und dem Handlenkmoment ausgebildet ist. Versucht also der Fahrer trotz des Gegenlenkmoments die Fahrspur durch einen eigenen Lenkeingriff, das Handlenkmoment, zu verlassen, kann in einer ersten Variante überprüft werden, ob das Handlenkmoment selber einen bestimmten Schwellwert überschreitet. Ist dies der Fall, wird das Gegenlenkmoment, gegebenenfalls gerampt, deaktiviert. Statt dem Betrag des Handlenkmoments selber kann jedoch auch der Betrag der Differenz zwischen dem Handlenkmoment und dem Gegenlenkmoment betrachtet werden, wenn die Stärke des fahrerassistenzsystemseitigen Lenkeingriffs berücksichtigt werden soll. Auch hier kann ein Schwellwert vorgesehen sein. Dieser Schwellwert kann nun erfindungsgemäß erhöht werden, wenn der Eingriffszeitpunkt und/oder der Warnungszeitpunkt nach außen verschoben wurde. In der dritten Variante kann vorgesehen sein, dass das Handlenkmoment - insbesondere anteilig - von dem Gegenlenkmoment subtrahiert wird, um die Übersteuerung zu ermöglichen. Dann kann bei Vorliegen einer Verschiebung des Warnzeitpunkts bzw. Eingriffszeitpunkts eine geringere Anrechnung erfolgen. Wird also beispielsweise das Handlenkmoment normalerweise zu 100 % beachtet, so kann vorgesehen sein, dass das Handlenkmoment in den genannten Fällen nur zu 30 % berücksichtigt wird, um eine Übersteuerung zu erschweren.

In vorteilhafter Ausgestaltung der zusätzlichen Warnung kann vorgesehen sein, dass die Warnung ein akustisches und/oder ein haptisches Signal ist, insbesondere eine Vibration des Lenkrads zusätzlich zu dem Gegenlenkmoment. Die letztgenannte Ausgestaltung ist besonders zweckmäßig, da das Gegenlenkmoment und die Warnung gemeinsam in einem Signal integriert werden, das bedeutet, dem Fahrer wird zum einen der Gegenlenkvorgang des Fahrerassistenzsystems bewusst, auf den er zusätzlich durch die Vibration des Lenkrads hingewiesen wird. Jedoch sind auch andere Warnungen denkbar, beispielsweise die Ausgabe eines Geräuschs oder Tons über ein akustisches Warnmittel.

Neben dem Verfahren betrifft die vorliegende Erfindung ein Kraftfahrzeug mit den Merkmalen des Anspruchs 11. Das Fahrerassistenzsystem des Kraftfahrzeugs ist also insbesondere zur Durchführung des erfindungsgemäßen Verfahrens ausgebildet, so dass sämtliche dortigen Ausführungen sich analog auf das erfindungsgemäße Kraftfahrzeug mit dem speziell ausgebildeten Fahrerassistenzsystem übertragen lassen. Ein solches Fahrerassistenzsystem zur Querführung kann beispielsweise ein Steuergerät und wenigstens einen zugeordneten Sensor, insbesondere eine Kamera, umfassen, wobei im Steuergerät Signale der Sensoren und gegebenenfalls zusätzlich, beispielsweise über ein Bussystem, übermittelte Informationen anderer Fahrzeugsysteme verarbeitet werden.

Es sei schließlich noch angemerkt, dass es durchaus möglich ist, ein Fahrerassistenzsystem zur Querführung zu realisieren, welches letztlich zwei Betriebsmodi aufweist, zum einen nämlich einen mittenführenden Betriebsmodus, zum anderen einen spät eingreifenden Spurhaltemodus. Dann ist es selbstverständlich auch möglich, das erfindungsgemäße Verfahren in den jeweiligen verschiedenen Ausgestaltungen für das Fahrerassistenzsystem als Ganzes zu realisieren, das bedeutet, im mittenführenden Betriebsmodus wird Einfluss auf die zu haltende Mittenposition genommen, im spät eingreifenden Spurhaltemodus kann die Breite und/oder Lage des warnungsfreien und/oder eingriffsfreien Bereichs angepasst werden.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug,
- Fig. 2: einen Eingriffe eines spät eingreifenden Fahrerassistenzsys- tems erläuternden Graphen,
- Fig. 3: einen den Eingriff eines mittenführenden Fahrerassistenzsys- tems erläuternden Graphen,
- Fig. 4: eine erste eine Verkehrssituation zeigende Skizze,
- Fig. 5: eine zweite eine Verkehrssituation zeigende Skizze,
- Fig. 6: eine eine Kurve zeigende Skizze,
- Fig. 7: eine Variante einer schwellwertbasierten Aktion des Fahrers zum Deaktivieren eines Gegenlenkmoments, und
- Fig. 8: eine mögliche Ausgestaltung einer zusätzlichen Warnung bei Gabe eines Gegenlenkmoments.

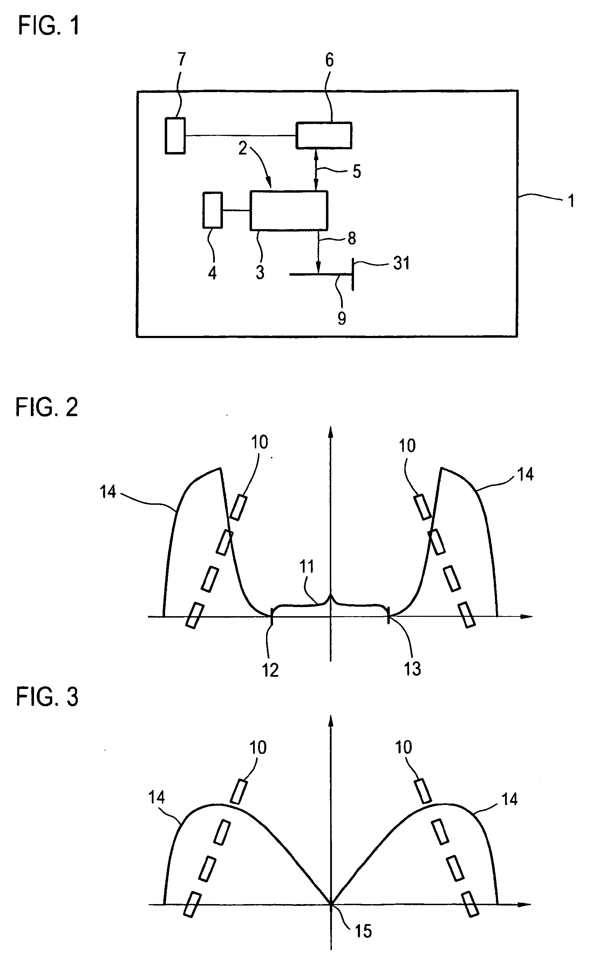

Fig. 1 zeigt eine Prinzipskizze eines erfindungsgemäßen Kraftfahrzeugs 1. Es umfasst ein Fahrerassistenzsystem 2 zur Querführung des Kraftfahrzeugs 1, welches ein Steuergerät 3 sowie eine geeignete Sensorik 4 umfasst. Über ein bei 5 angedeutetes Bussystem ist eine Kommunikation des Fahrerassistenzsystems 2 mit weiteren Fahrzeugsystemen 6 möglich. Solche weiteren Fahrzeugsysteme 6 können beispielsweise andere Fahrerassistenzsysteme umfassen, beispielsweise Spurwechselassistenten oder Längsführungssysteme, denen beispielsweise Ultraschallsensoren 7 zugeordnet sein können, aber auch andere Steuergeräte, beispielsweise Motorsteuergeräte oder dergleichen. Auch Navigationssysteme können an das Bussystem 5 angeschlossen sein.

Das Fahrerassistenzsystem 2 ist nun in einem ersten Betriebsmodus, nämlich einem spät eingreifenden Spurhaltemodus, dazu ausgebildet, wie durch den Pfeil 8 angedeutet wird, Eingriff auf das Lenksystem 9 zu nehmen, wenn bestimmte Bedingungen erfüllt sind, insbesondere ein Eingriffszeitpunkt erreicht ist.

Es sei an dieser Stelle angemerkt, dass während die Beschreibung der konkreten Ausführungsbeispiele auf ein eingreifendes Fahrerassistenzsystem 2 gerichtet ist, die Ausführungen selbstverständlich analog auf ein warnendes Fahrerassistenzsystem 2 übertragen werden können.

Zum Ermitteln des Eingriffszeitpunkts kann beispielsweise die Zeit bis zum Erreichen einer erkannten Spurmarkierung durch das Kraftfahrzeug 1 betrachtet werden, die dann mit einer Schwelle verglichen wird. Analog ist es selbstverständlich auch möglich, verschieden definierte Abstände zur Spurmarkierung zu betrachten, um den Eingriffszeitpunkt zu ermitteln. Letztlich zeichnet sich der Eingriffszeitpunkt dadurch aus, dass ein Verlassen der aktuellen Spur durch das Kraftfahrzeug 1 droht.

Dann wird durch das Fahrerassistenzsystem 2 ein Gegenlenkmoment in das Lenksystem 9 gegeben, das so gerichtet ist, dass das Kraftfahrzeug 1 dennoch in der aktuellen Fahrspur verbleiben soll. Dies wird durch die Fig. 2 näher erläutert. Dort ist auf der x-Achse letztlich die Position des Kraftfahrzeugs 1 bezüglich der Spurmitte abgebildet, auf der y-Achse das Gegenlenkmoment des Fahrerassistenzsystems 2. Dabei sind die erkannten Spurmarkierungen 10 der aktuell befahrenen Spur angedeutet. Offensichtlich existiert ein eingriffsfreier Bereich 11, der durch die linksseitigen bzw. rechtsseitigen Eingriffszeitpunkte 12 und 13 definiert wird. Erreicht das Kraftfahrzeug 1 einen der Eingriffszeitpunkte 12, 13, so wird vom Fahrerassistenzsystem 2 ein Gegenlenkmoment 14 erzeugt, um das Kraftfahrzeug 1 dennoch auf der Spur zu halten.

Bei dem Fahrerassistenzsystem 2 ist es nun ferner möglich, dass durch eine fahrerseitige Aktion, hier ein Handlenkmoment, dieses Gegenlenkmoment 14 wieder deaktivierbar oder übersteuerbar ist. Der Fahrer kann also durch entsprechendes händisches Lenken dennoch ein Verlassen der aktuellen Fahrspur ermöglichen, worauf später noch näher eingegangen wird.

In einem weiteren Betriebsmodus des Fahrerassistenzsystems 2, einem mittenführenden Betriebsmodus, in dem das Fahrerassistenzsystem 2 als mittenführendes Fahrerassistenzsystem betrieben wird, ergibt sich ein anderes Bild des Querführungseingriffs des Fahrerassistenzsystems 2, welches durch Fig. 3 näher dargestellt wird, welche wiederum das Gegenlenkmoment, hier über der tatsächlichen Position des Kraftfahrzeugs 1 auf der aktuellen Fahrspur, aufgetragen zeigt. Ersichtlich existiert hier kein eingriffsfreier Bereich 11, sondern eine ausgezeichnete, zu haltende Mittenposition 15, die im dargestellten Beispiel der exakten Spurmitte der aktuell befahrenen Spur entspricht. Weicht das Kraftfahrzeug 1 von dieser zu haltenden Mittenposition 15 ab, wird sofort ein Gegenlenkmoment 14 erzeugt, um die zu haltende Mittenposition 15 wieder zu erreichen.

Bei dem erfindungsgemäßen Kraftfahrzeug, dessen Fahrerassistenzsystem 2 zur Querführung über das erfindungsgemäße Verfahren betrieben wird, ist es nun möglich, die Lage und/oder Breite des eingriffsfreien Bereichs 11 bzw. der zu haltenden Mittenposition 15 abhängig von der aktuellen Situation anzupassen. Die spezielle Situation wird durch die Umgebung des Kraftfahrzeugs 1 beschreibende Größen (im Folgenden Umgebungsgrößen) beschrieben, die zum einen von der Sensorik 4 und dem Steuergerät 2 des Fahrerassistenzsystems 2 selber bestimmt werden können, aber auch über andere Fahrzeugsysteme 6 übermittelt werden können, um dann zur Anpassung verwendet zu werden. Insbesondere können als solche Umgebungsgrößen wenigstens eine wenigstens ein Objekt in der Umgebung des Kraftfahrzeugs beschreibende Größe und/oder wenigstens eine die Kurvigkeit der Fahrspur beschreibende Größe verwendet werden. Die Kurvigkeit der Fahrspur wird dabei häufig durch das Fahrerassistenzsystem 2, genauer, das Steuergerät 3, bereits ermittelt. Ein Objekt - beispielsweise eine Leitplanke, Vegetation oder auch ein anderes Kraftfahrzeug - kann beispielsweise aus Daten der Ultraschallsensorik 7 bestimmt werden, jedoch sind auch andere Sensorarten, beispielsweise wenigstens ein Radarsensor bzw. wenigstens ein Lidarsensor oder eine Kamera denkbar. Beispielsweise werden im vorliegenden Fall die Daten der Ultraschallsensoren 7 durch ein weiteres Fahrerassistenzsystem ausgewertet, um zu ermitteln, ob ein relevantes, der aktuellen Spur benachbartes Objekt existiert. Ein entsprechendes Signal kann an das Fahrerassistenzsystem 2 übermittelt werden.

Es sei an dieser Stelle noch angemerkt, dass das Fahrerassistenzsystem 2 auch zur Berücksichtigung von das aktuelle Fahrverhalten und den Fahrstil des Fahrers kennzeichnenden Größen ausgebildet ist, um so Vorlieben des Fahrers in bestimmten Situationen oder aktuelle Wünsche des Fahrers erfassen und berücksichtigen zu können. Beispielsweise kann - insbesondere auch bei ausgeschaltetem Fahrerassistenzsystem - beobachtet werden, wo auf der aktuellen Fahrspur der Fahrer das Kraftfahrzeug 1 bei bestimmten Situationen bevorzugt oder immer bewegt. Das Fahrerassistenzsystem 2 berücksichtigt also auch den konkreten Fahrstil des Fahrers des Kraftfahrzeugs 1, um eine optimale Anpassung zu ermöglichen.

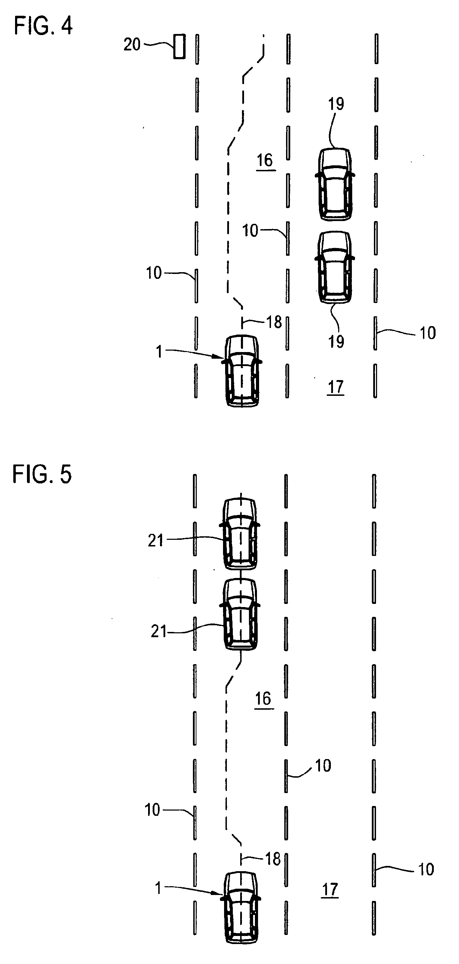

Verschiedene beispielhafte Situationen und die mögliche Reaktion des Fahrerassistenzsystems 2 auf dieselben werden in den Figuren 4-6 näher für das Beispiel des mittenführenden Betriebsmodus gezeigt; entsprechende Anpassungen im spät eingreifenden Spurhaltemodus werden im Text erläutert.

Fig. 4 zeigt schematisch das erfindungsgemäße Kraftfahrzeug 1 auf seiner aktuellen Fahrspur 16, an die sich rechts eine weitere Fahrspur 17 anschließt. Ebenso eingezeichnet sind die Spurmarkierungen 10. Da der mittenführende Betriebsmodus aktiviert ist, bewegt sich das Kraftfahrzeug 1 auf einer zu haltenden Mittenposition 18, also einer Ideallinie. Diese entspricht zu Beginn, also unten in Fig. 4, der geometrischen Mitte der Fahrspur 16. Den Umgebungsgrößen ist nun zu entnehmen, dass sich relevante, erhabene Objekte in einem bestimmten longitudinalen Entfernungsbereich auf der benachbarten Fahrspur 17 befinden, hier Fahrzeuge 19 einer Fahrzeugkolonne. Das Fahrerassistenzsystem 2 reagiert darauf, indem die zu haltende Mittenposition 18 kurz vor Erreichen der Fahrzeuge 19 etwas nach links, also von den Fahrzeugen 19 weg, verschoben wird, so dass das Kraftfahrzeug 1 automatisch einen "Respektsabstand" hält. Es sei an dieser Stelle angemerkt, dass bei genügend genauer Erfassung selbstverständlich auch anhand der Art der Fahrzeuge 19, beispielsweise LKW/PKW, differenziert werden kann.

Ein weiteres einer Spurmarkierung 10 der aktuellen Fahrspur 16 unmittelbar benachbartes Objekt ist eine später folgende Leitplanke 20. Während nach dem Passieren der durch die Fahrzeuge 19 gebildeten Fahrzeugkolonne die zu haltende Mittenposition wieder auf die geometrische Mitte der Fahrspur 16 rückkorrigiert wurde, wird mit Erreichen der wegen der Fahrspurmarkierung 10 benachbarten Leitplanke 20 die zu haltende Mittenposition wiederum angepasst, in diesem Fall von der Leitplanke 20 weg, also nach rechts. Es sei im Übrigen angemerkt, dass bei beidseitigem Vorliegen der Fahrspur 16 benachbarter Objekte auch eine gewichtete Verschiebung erfolgen kann.

Im spät eingreifenden Spurhaltemodus würde entsprechend der eingriffsfreie Bereich 11 bei den Fahrzeugen 19 nach links verschoben, bei der Leitplanke 20 nach rechts. Das bedeutet, dass auf der den Objekten angewandten Seite der Eingriffszeitpunkt später erreicht wird, auf der den Objekten zugewandten Seite jedoch früher. Beidseitig wird also letztlich der Eingriffszeitpunkt verschoben, indem beispielsweise die eingangs bereits genannte Schwelle (also ein Grenzwert) angepasst wird.

Ein weiteres Beispiel einer Verkehrssituation zeigt die Fig. 5, die wiederum das erfindungsgemäße Kraftfahrzeug 1 auf der aktuell befahrenen Spur 16 zeigt. Es existiert jedoch eine Kolonne von vorausfahrenden Fahrzeugen 21. Der Fahrer hat nun Interesse, an diesen Fahrzeugen 21 vorbeizusehen. Er lenkt also für eine bestimmte Zeit beständig nach links aus der zu haltenden Mittenposition 18 heraus. Dies erkennt das Fahrerassistenzsystem 2, zudem existiert die die vorausfahrenden Fahrzeuge 21 anzeigende Umgebungsgröße. Dann wird die zu haltende Mittenposition insgesamt nach links verschoben wird, bis der Fahrer durch ein Gegenlenken nach rechts wiederum anzeigt, in die ursprünglich zu haltende Mittenposition 18 zurückkehren zu wollen.

Im Fall des spät eingreifenden Spurhaltemodus wird wenigstens linksseitig allgemein bei einer vorausfahrenden Kolonne der Querführungseingriff später gestartet, also der Eingriffszeitpunkt mehr zur linksseitigen Spurmarkierung 10 verschoben. Gegebenenfalls kann vorgesehen sein, dass gleichzeitig der rechtsseitige Lenkeingriff früher erfolgt. So wird dem Fahrer nach links mehr Raum gegeben, der eingriffsfrei bleibt, der eingriffsfreie Bereich wird also nach links erweitert oder verschoben.

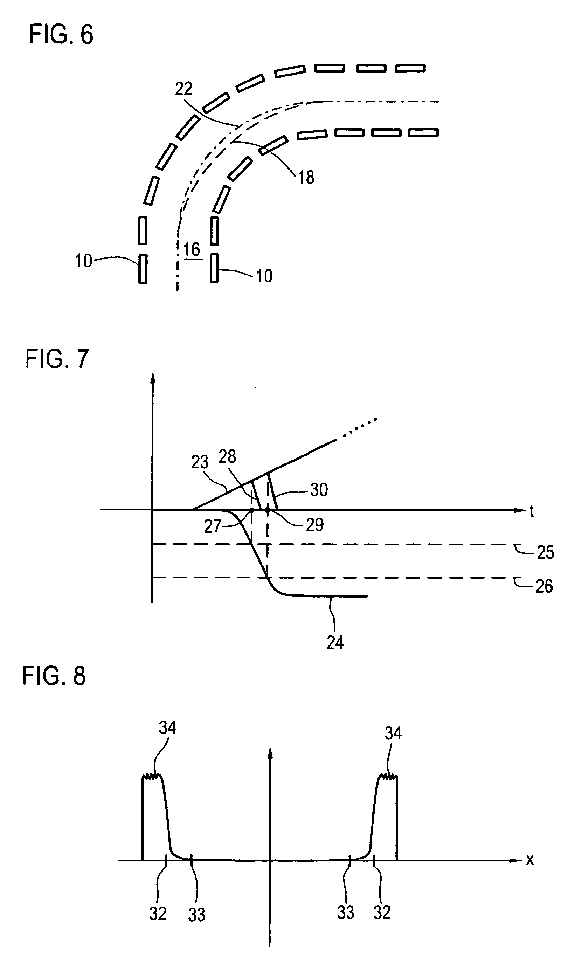

In Fig. 6 beschreibt die aktuelle Fahrspur 16 eine Kurve. Dabei zeigt die gestrichpunktete Linie 22 die geometrische Mitte der Fahrspur 16 an, welche außerhalb der Kurve noch als zu haltende Mittenposition 18 (wiederum gestrichelt dargestellt) genutzt wird. In der Kurve wird jedoch, um ein Schneiden der Kurve zu unterstützen, die zu haltende Mittenposition leicht zum Kurveninneren hin verschoben. Analog kann im spät eingreifenden Spurhaltemodus zum Kurveninneren hin dem Fahrer mehr Freiraum gegeben werden, indem ein Eingriff später erfolgt. Das Fahrerassistenzsystem 2 ist nun ferner dazu ausgebildet, bei einer Verschiebung des Eingriffszeitpunkts nach außen eine zusätzliche Warnung bei erkannten Verlassen der Fahrspur auszugeben oder den Schwellwert zur Deaktivierung des Gegenlenkmoments des Fahrerassistenzsystems 2 bei einem Handlenkmoment des Fahrers zu erhöhen. Dies gilt selbstverständlich nur für den spät eingreifenden Spurhaltemodus. Es wird durch Fig. 7 und Fig. 8 näher erläutert.

Fig. 7 zeigt einen Graphen, in dem das Lenkmoment über der Zeit t aufgetragen ist. Während die Kurve 23 den Verlauf eines Gegenlenkmoments zeigt, beschreibt die Kurve 24 ein entgegengerichtetes Handlenkmoment des Fahrers. Eingezeichnet sind weiterhin zwei Schwellwerte 25, 26.

Im Normalbetrieb, wenn also keine Verschiebung des Eingriffszeitpunkts nach außen vorliegt, ist der Schwellwert 25 relevant. Wird er durch den Betrag des Handlenkmoments erreicht, Punkt 27, wird das Gegenlenkmoment deaktiviert, Rampe 28. Wird nun jedoch der Eingriffszeitpunkt nach außen verschoben, ist der Schwellwert 26 relevant. Erst bei seinem Erreichen, Punkt 29, wird in diesem Fall das Gegenlenkmoment deaktiviert, Rampe 30. Das Deaktivieren wird also erschwert.

Statt dem absoluten Betrag des Handlenkmoments kann auch die Differenz zwischen dem Gegenlenkmoment und dem Handlenkmoment, genauer, ihr Betrag, betrachtet werden. Denkbar ist auch eine Übersteuerbarkeit, wobei das Handlenkmoment verschieden stark auf das Gegenlenkmoment angerechnet wird.

Schließlich zeigt Fig. 8 noch eine Möglichkeit zur Ausgabe einer Warnung in Form einer Vibration des Lenkrads 31 des Kraftfahrzeugs 1. So ist in Fig. 5 die Höhe des Gegenlenkmoments gegen die Position x des Kraftfahrzeugs 1 aufgetragen, wobei hier die Punkte 32 die Spurmarkungen symbolisieren sollen. Die Punkte 33 stellen die Eingriffszeitpunkte dar. Zusätzlich zu dem Gegenlenkmoment wird hier jedoch auch eine Vibration 34 auf das Lenkrad 31 gegeben, die als Warnung dient.

Selbstverständlich sind auch andere Arten von Warnungen denkbar, beispielsweise kann zusätzlich oder alternativ ein Ton ausgegeben werden, wenn die Spurmarkierung überschritten wird oder gar schon am Eingriffszeitpunkt 33.

## Patentansprüche

1. Verfahren zum Betrieb eines Fahrerassistenzsystems zur Querführung eines Kraftfahrzeugs, insbesondere eines Spurhalteassistenzsystems, welches Fahrerassistenzsystem zum Durchführen eines Querführungseingriffs und/oder zum Warnen des Fahrers bei einem erkannten Verlassen der Spur durch das Kraftfahrzeug ausgebildet ist, wobei die Lage und/oder Breite eines eingriffsfreien und/oder warnungsfreien Bereichs und/oder bei einem mittenführenden Fahrerassistenzsystem die zu haltende Mittenposition in Abhängigkeit wenigstens einer die Umgebung des Kraftfahrzeugs beschreibenden Größe angepasst wird,
**dadurch gekennzeichnet,**
**dass** bei einer Verschiebung des Eingriffszeitpunktes und/oder des Warnungszeitpunktes nach außen eine zusätzliche Warnung bei erkanntem Verlassen der Fahrspur ausgegeben wird und/oder bei einem durch eine gegebenenfalls schwellwertbasierte Aktion, insbesondere ein Handlenkmoment, des Fahrers deaktivierbaren und/oder übersteuerbaren Querführungseingriff der Schwellwert erhöht und/oder die Aktion geringer auf die Übersteuerung angerechnet wird.

2. Verfahren nach Anspruch 1,
**dadurch gekennzeichnet,**
**dass** als die Umgebung des Kraftfahrzeugs beschreibende Größe wenigstens eine wenigstens ein Objekt in der Umgebung des Kraftfahrzeugs beschreibende Größe und/oder wenigstens eine die Kurvigkeit der Fahrspur beschreibende Größe verwendet wird.

3. Verfahren nach Anspruch 1 oder 2,
**dadurch gekennzeichnet,**
**dass** bei der Anpassung auch wenigstens eine das aktuelle Fahrverhalten und/oder den Fahrstil des Fahrers kennzeichnende Größe berücksichtigt wird.

4. Verfahren nach einem der vorangehenden Ansprüche,
**dadurch gekennzeichnet,**
**dass** eine Schwelle zum Durchführen des Querführungseingriffs oder zum Warnen des Fahrers, insbesondere unabhängig auf beiden Seiten der Fahrspur, angepasst wird.

5. Verfahren nach Anspruch 4,
**dadurch gekennzeichnet,**
**dass** eine Schwelle so angepasst wird, dass ein Querführungseingriff und/oder eine Warnung später erfolgen.

6. Verfahren nach einem der vorangehenden Ansprüche,
**dadurch gekennzeichnet,**
**dass** bei einem wenigstens ein außerhalb der aktuellen Fahrspur liegendes, einer Fahrspurmarkierung der aktuellen Fahrspur benachbartes, relevantes Objekt anzeigenden Signal ein Querführungseingriff und/oder eine Warnung auf der dem Objekt abgewandten Fahrspurseite später erfolgt oder die zu haltende Mittenposition von dem Objekt weg verschoben wird.

7. Verfahren nach einem der vorangehenden Ansprüche,
**dadurch gekennzeichnet,**
**dass** bei einem wenigstens ein dem Kraftfahrzeug voranfahrendes Fahrzeug anzeigendem Signal ein Querführungseingriff und/oder eine Warnung linksseitig später erfolgen.

8. Verfahren nach einem der vorangehenden Ansprüche,
**dadurch gekennzeichnet,**
**dass** bei einem mittenführenden Fahrerassistenzsystem bei einem wenigstens ein dem Kraftfahrzeug voranfahrendes Fahrzeug anzeigenden Signal und einem für eine vorbestimmte Zeit andauernden Gegenlenken des Fahrers nach links die zu haltende Mittenposition nach links verschoben wird.

9. Verfahren nach Anspruch 8,
**dadurch gekennzeichnet,**
**dass** bei einem nachfolgenden rechtsseitigen Gegenlenken des Fahrers die linksseitige Verschiebung der zu haltenden Mittenposition aufgehoben wird.

10. Verfahren nach einem der vorangehenden Ansprüche,
**dadurch gekennzeichnet,**
**dass** bei einer Kurve eine Anpassung ein Schneiden der Kurve unterstützend erfolgt.

11. Kraftfahrzeug (1), umfassend ein insbesondere zur Durchführung des Verfahrens nach einem der Ansprüche 1 bis 11 ausgebildetes Fahrerassistenzsystem (2) zur Querführung des Kraftfahrzeugs (1), insbesondere ein Spurhalteassistenzsystem, welches Fahrerassistenzsystem (2) zum Durchführen eines Querführungseingriffs und/oder zum Warnen des Fahrers bei einem erkannten Verlassen der Spur durch das Kraftfahrzeug (1) ausgebildet ist, wobei die Lage und/oder Breite eines eingriffsfreien und/oder warnungsfreien Bereichs (11) und/oder bei einem mittenführenden Fahrerassistenzsystem (2) die zu haltende Mittenposition (15, 18) in Abhängigkeit wenigstens einer die Umgebung des Kraftfahrzeugs (1) beschreibenden Größe anpassbar ist,
**dadurch gekennzeichnet,**
**dass** bei einer Verschiebung des Eingriffszeitpunktes und/oder des Warnungszeitpunktes nach außen eine zusätzliche Warnung bei erkanntem Verlassen der Fahrspur ausgebbar ist und/oder bei einem durch eine gegebenenfalls schwellwertbasierte Aktion, insbesondere ein Handlenkmoment, des Fahrers deaktivierbaren und/oder übersteuerbaren Querführungseingriff der Schwellwert erhöhbar und/oder die Aktion geringer auf die Übersteuerung anrechenbar ist.

## Claims

1. Method for operating a driver assistance system for the transverse guidance of a motor vehicle, in particular a lane departure warning system, which driver assistance system is configured for carrying out a transverse guidance intervention and/or for warning the driver if it is detected that the motor vehicle has moved out of the lane, the position and/or width of an intervention-free and/or warning-free region and/or the central position to be maintained in a centrally guiding driver assistance system being adjusted as a function of at least one of the parameters defining the surroundings of the motor vehicle, **characterised in that**, in the event of an outward shift of the intervention point and/or the warning point, an additional warning is emitted if it is detected that the motor vehicle has moved out of the lane, and/or in the event of a transverse guidance intervention which can be deactivated and/or oversteered by an action, in particular manual steering torque, of the driver, which action is based optionally on a threshold value, the threshold value is increased and/or the action has less of an effect on the oversteer.

2. Method according to claim 1, **characterised in that** at least one set of parameter defining at least one object in the surroundings of the motor vehicle and/or at least one parameter defining the curvature of the lane is used as the parameter defining the surroundings of the motor vehicle.

3. Method according to either claim 1 or claim 2, **characterised in that**, during the adjustment, at least one parameter characterising the current driving behaviour and/or the driving style of the driver is also taken into account.

4. Method according to any one of the preceding claims, **characterised in that** a threshold is adjusted for carrying out the transverse guidance intervention or for warning the driver, in particular independently on the two sides of the lane.

5. Method according to claim 4, **characterised in that** a threshold is adjusted in such a way that a transverse guidance intervention and/or a warning subsequently occur.

6. Method according to any one of the preceding claims, **characterised in that** upon a signal indicating at least one relevant object which is positioned outside the current lane and is adjacent to a lane marking of the current lane, a transverse guidance intervention and/or a warning subsequently occurs on the side of the lane facing away from the object or the central position to be maintained is displaced away from the object.

7. Method according to any one of the preceding claims, **characterised in that** upon a signal indicating at least one vehicle driving in front of the motor vehicle, a transverse guidance intervention and/or a warning subsequently occur on the left-hand side.

8. Method according to any one of the preceding claims, **characterised in that** in a centrally guiding driver assistance system, the central position to be maintained is displaced to the left upon a signal indicating at least one vehicle driving in front of the motor vehicle and upon counter-steering to the left by the driver which lasts for a predetermined time period.

9. Method according to claim 8, **characterised in that** upon subsequent counter-steering to the right by the driver, the left-hand displacement of the central position to be maintained is counteracted.

10. Method according to any one of the preceding claims, **characterised in that** in the case of a corner, an adjustment for cutting the corner occurs as assistance.

11. Motor vehicle (1), comprising a driver assistance system (2) for the transverse guidance of the motor vehicle (1), which system is configured in particular for carrying out the method according to any one of claims 1 to 11 and is in particular a lane departure warning system, which driver assistance system (2) is configured for carrying out a transverse guidance intervention and/or for warning the driver if it is detected that the motor vehicle (1) has moved out of the lane, position and/or width of an intervention-free and/or warning-free region (11) and/or the central position (15, 18) to be maintained in a centrally guiding driver assistance system (2) is capable of being adjusted as a function of at least one of the parameters defining the surroundings of the motor vehicle (1), **characterised in that** in the event of an outward shift of the intervention point and/or the warning point, an additional warning can be emitted if it is detected that the motor vehicle has moved out of the lane, and/or in the event of a transverse guidance intervention which can be deactivated and/or oversteered by an action, in particular manual steering torque, of the driver, which is action based optionally on a threshold value, the threshold value can be increased and/or the action can have less of an effect on the oversteer.

## Revendications

1. Procédé de fonctionnement d'un système d'assistance au conducteur pour le guidage transversal d'un véhicule automobile, en particulier un système d'assistance au maintien de la voie de circulation, lequel système d'assistance au conducteur est conçu pour effectuer une intervention de guidage transversal et/ou pour avertir le conducteur lors d'une sortie de la voie identifiée par le véhicule automobile, dans lequel la situation et/ou la largeur d'une zone sans intervention et/ou sans avertissement et/ou, dans le cas d'un système d'assistance au conducteur à guidage central, la position centrale à maintenir est ou sont ajustées en fonction d'au moins une grandeur décrivant l'environnement du véhicule automobile, **caractérisé en ce que**,
dans le cas d'un décalage du moment d'intervention et/ou du moment d'avertissement, un avertissement supplémentaire est délivré vers l'extérieur lors d'une sortie de la voie de circulation identifiée et/ou, dans le cas d'une intervention de guidage transversal qui peut être désactivée et/ou survirée par une action s'appuyant éventuellement sur une valeur de seuil, en particulier un moment de braquage manuel, du conducteur, la valeur de seuil est augmentée et/ou l'action est plus faiblement imputée au survirage.

2. Procédé selon la revendication 1,
**caractérisé en ce que**,
comme grandeur décrivant l'environnement du véhicule automobile, on utilise au moins une grandeur décrivant au moins un objet dans l'environnement du véhicule automobile et/ou au moins une grandeur décrivant la courbure de la voie de circulation.

3. Procédé selon la revendication 1 ou 2,
**caractérisé en ce que**,
lors de l'adaptation, au moins une grandeur caractérisant le comportement de conduite actuel et/ou le style de conduite du conducteur est également prise en compte.

4. Procédé selon l'une quelconque des revendications précédentes, **caractérisé en ce que**
un seuil est adapté pour effectuer l'intervention de guidage transversal ou pour avertir le conducteur, en particulier indépendamment des deux côtés de la voie de circulation.

5. Procédé selon la revendication 4,
**caractérisé en ce que**
un seuil est adapté de manière à retarder une intervention de guidage transversal et/ou un avertissement.

6. Procédé selon l'une quelconque des revendications précédentes, **caractérisé en ce que**,
dans le cas d'un signal indiquant au moins un obj et important situé en dehors de la voie de circulation actuelle, voisin d' un marquage de la voie de circulation actuelle, on retarde une intervention de guidage transversal et/ou un avertissement du côté de la voie de circulation opposé à l'objet ou on décale de l'objet la position centrale à maintenir.

7. Procédé selon l'une quelconque des revendications précédentes, **caractérisé en ce que**,
dans le cas d'un signal indiquant au moins un véhicule précédant le véhicule automobile, on retarde une intervention de guidage transversal et/ou un avertissement du côté gauche.

8. Procédé selon l'une quelconque des revendications précédentes, **caractérisé en ce que**,
dans le cas d'un système d'assistance au conducteur à conduite centrale, pour un signal indiquant au moins un véhicule précédant le véhicule automobile et un contre-braquage du conducteur vers la gauche sur un intervalle prédéterminé, la position centrale à maintenir est décalée vers la gauche.

9. Procédé selon la revendication 8,
**caractérisé en ce que**,
dans le cas d'un contre-braquage suivant côté droit effectué par le conducteur, le décalage côté gauche de la position centrale à maintenir est supprimé.

10. Procédé selon l'une quelconque des revendications précédentes, **caractérisé en ce que**,
dans le cas d'un tournant, une adaptation s'effectue en s'appuyant sur le tournant à la corde.

11. Véhicule automobile (1), comprenant un système d'assistance au conducteur (2) conçu pour mettre en oeuvre le procédé selon l'une quelconque des revendications 1 à 11 pour le guidage transversal du véhicule automobile (1), en particulier un système d'assistance au maintien de la voie, lequel système d'assistance au conducteur (2) est conçu pour effectuer une intervention de guidage transversal et/ou pour avertir le conducteur lors d'une sortie de la voie identifiée par le véhicule automobile (1), dans lequel la situation et/ou la largeur d'une zone (11) sans intervention et/ou sans avertissement et/ou, dans le cas d'un système d'assistance au conducteur (2) à conduite centrale, la position centrale (15, 18) à maintenir peut ou peuvent être adaptées en fonction d'au moins une grandeur décrivant l'environnement du véhicule automobile (1),
**caractérisé en ce que**,
dans le cas d'un décalage du moment d'intervention et/ou du moment d'avertissement, un avertissement supplémentaire peut être délivré vers l'extérieur lors d' une sortie de la voie de circulation identifiée et/ou, dans le cas d'une intervention de guidage transversal qui peut être désactivée et/ou survirée par une action s'appuyant éventuellement sur une valeur de seuil, en particulier un moment de braquage manuel, du conducteur, la valeur de seuil peut être augmentée et/ou l'action peut être plus faiblement imputée au survirage.
